(19) Europäisches Patentamt

European Patent Office

Office européen des brevets

(11) **EP 4 686 385 A1**

(12) **EUROPEAN PATENT APPLICATION**

(43) Date of publication:
04.02.2026 Bulletin 2026/06

(21) Application number: 24382840.7

(22) Date of filing: **30.07.2024**

(51) International Patent Classification (IPC):
*A01B 79/00* (2006.01)    *A01M 7/00* (2006.01)
*A01M 21/04* (2006.01)    *G06F 16/29* (2019.01)
*G06Q 50/02* (2024.01)

(52) Cooperative Patent Classification (CPC):
**A01M 7/0089; G06Q 10/063; G06Q 50/02;**
A01B 76/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **The Waatic Company, S.L.**
**08630 Abrera Barcelona (ES)**

(72) Inventor: **Blasco Martínez, Javier**
**98759 Vallirana (Barcelona) (ES)**

(74) Representative: **Espiell Gomez, Ignacio**
**R. Volart Pons y Cia., S.L.**
**Pau Claris, 77 2o 1a**
**08010 Barcelona (ES)**

Remarks:
Claims 16-20 are deemed to be abandoned due to
non-payment of the claims fees (Rule 45(3) EPC).

(54) **METHOD AND EQUIPMENT FOR INTELLIGENT AUTOMATION OF AGRICULTURAL TREATMENTS**

(57) The present invention relates to a method and equipment for intelligent automation of agricultural treatments comprising digitalising a machine (1) with sensors (3) and actuators (4) connected to an electronic box (5) which, in turn, is connected via Bluetooth to a mobile device (6), tablet or smartphone, with a specific app and communication with the cloud; and, being programmed in the app itself or in a remote processor (7), specific algorithms which, based on the data from the sensors (3) and/or measuring devices and, optionally, from other devices via IoT and satellite, execute the calculations that define the parameters of the actuators (4) of the machine (1) that are activated or deactivated, in accordance with at least one piece of information entered into the app indicating which machine (1) is being actuated. For product dosing treatments, with sprayers (1.1) associated with a tank (1.2), it comprises ultrasound sensors (3.5) to detect the presence and/or volume of vegetation.

Fig. 1

EP 4 686 385 A1

**Description**

**OBJECT OF THE INVENTION**

The invention, as expressed in the title of this specification, relates to a method and equipment for intelligent automation of agricultural treatments, providing advantages and features that are described in detail below, and which represent an improvement on the current state of the art.

The object of the present invention relates to a method and equipment specifically designed to carry out agricultural and horticultural treatments, particularly those that require the use of machinery for dosing phytosanitary products and/or subsoiler machinery incorporated in one or more trailers towed by a tractor vehicle, the purpose of which is to automatically adapt different actuators of said machinery based on parameters detected by sensors provided for this purpose therein and which send the information to a user's mobile device with an app specifically programmed for use with any of said agricultural machines that executes an algorithm the calculations of which, based on the data collected by the sensors, are transmitted to an electronic box that acts as a central unit, generating a response of activation of the actuators in the agricultural machine to which it is connected. Advantageously, it incorporates, among other options, ultrasound sensors capable of detecting, in an embodiment for the application of phytosanitary treatments, the vegetation presence and/or volume in the area to be treated in order to adapt the dispenser actuators accordingly.

**FIELD OF APPLICATION OF THE INVENTION**

The field of application of the present invention falls within the agricultural sector, focussing particularly on the area of apparatuses, accessories and devices for applying agricultural treatments and for automatically regulating the application thereof, while also covering the field of electronic devices and computer automation systems.

**BACKGROUND OF THE INVENTION**

The use of computer devices and applications and automated systems to optimise agricultural actions and work is well known, some of which are based on or include the use of AI (Artificial Intelligence) and IoT (Internet of Things).

However, in most cases existing equipment and systems have significant limitations and still require a large amount of prior and/or manual intervention by the user to determine the parameters or data that must be taken into account before using said devices, or to adapt the machinery, since the conditions of each crop, each area or each season and the particularities or requirements that may arise in each case often vary considerably.

The essential objective of the present invention is the development of an intelligent automation method or procedure, as well as equipment or system to carry out said method, which allows going a step further and reducing to a minimum the need to regulate and adapt the mechanisms of the different types of agricultural machinery to the particular conditions and needs of each case, especially applications using sprayer atomisers for phytosanitary products or manure, subsoilers or fruit picking machines. This is achieved by using computer applications that use specific algorithms based on mathematical calculations from information and data collected previously and/or in real time from the crop itself and/or the land to be treated, without the user having to decide whether the area is suitable or not for the programmed application or having to adapt the machinery each time the conditions or circumstances have changed or become different during the movement of the machine itself across the area to be treated.

Thus, one objective of the present invention is to provide intelligent automation equipment capable of adapting along the way the actuators of an atomiser that intervene in the application of a phytosanitary treatment and adjusting their activation or not so that they dose the amount of product that is convenient depending on the conditions of the vegetation in the area through which the machine is going to pass or is passing, so that, if in a certain section of the area to be treated for some reason there are no plants, the system detects this and avoids wasting product. On the contrary, if in a section of the area to be treated the plants have a greater density or greater volume or greater height than in the previous section, the system detects this and adapts the number and/or the position of the nozzles or actuators through which the product is expelled to increase the dose in said section.

Likewise, another objective of the present invention is to provide intelligent automation equipment capable of adapting the hydraulic or pneumatic actuators of a subsoiler that intervene in the ploughing treatment of a cropland and adjusting its position based on the depth required in each area through which the machine has to pass or through which it is passing.

Another objective of the present invention is to provide intelligent automation equipment capable of adjusting the speed of movement of the machine and/or the dose of product and/or the position or activation of the actuators based on maps of requirements that are calculated by the algorithm based on information previously collected in the same or another similar area.

Furthermore, and as a reference to the current state of the art, it should be noted that, at least on the part of the applicant, the existence of any other method or equipment, or any other invention of similar application, which presents technical and structural features equal to or similar to those claimed herein is unknown.

## DESCRIPTION OF THE INVENTION

The method and the intelligent automation equipment for agricultural treatments proposed by the invention are configured as an ideal solution to the objectives previously stated, with the characterising details that make it possible and that distinguish it from what is already known being conveniently collected in the final claims that accompany this description.

Specifically, what the invention proposes, as indicated above, is a method and equipment specifically designed to carry out agricultural and horticultural treatments, particularly those that require the use of machinery for dosing phytosanitary products and/or subsoiler machinery incorporated in one or more trailers pulled by a tractor vehicle, with the essential purpose of automatically adapting different actuators of said machinery based on the information collected by sensors incorporated for this purpose in the machinery itself and/or in the tractor. The sensors send the information to a mobile device, such as an electronic tablet or smartphone, which is handled by the user and on which a software application or app has been implemented, specifically programmed to be used with any of said agricultural machines and which executes an algorithm the calculations of which, based on the data collected by the sensors, are transmitted to an electronic box or central unit, to which the mobile device is connected via Bluetooth and which will have been fixed to the agricultural machine, generating a response of activation or not of one or other actuators of said machine, to which it is connected by wire, in order to dynamically adapt its work to the requirements at any time depending on the conditions of the crop or the land through which the machine is expected to pass or through which it is passing.

For all this, and more specifically, the method of intelligent automation of agricultural treatments, particularly applicable in treatments that contemplate the use of machinery for dosing phytosanitary products and/or subsoiler machinery incorporated in one or more trailers pulled by a tractor vehicle, essentially comprises the following steps:

- Digitalising the machinery to be used, by incorporating in at least one machine one or more sensors of a variable nature to collect data of different kinds as appropriate, one or more actuators to activate/deactivate, regulate and/or position one or more functional parts of the machine, and incorporating an electronic box or central unit physically connected to said actuators and physically or wirelessly connected to the sensors, and in turn wirelessly connected, via a Bluetooth connection, to a user's mobile device.

- Programming a specific app to recognise and be able to be executed with any of the digitalised agricultural machines that are going to be used, being able to be suitable for all types of machines, both new and existing ones.

- Implementing the app on a mobile device such as a tablet, smartphone or similar, suitable as a user interface, which connects wirelessly, via a Bluetooth connection, to the electronic box of the machine to be used;

- Before starting the treatment, linking by the user, by automatic or manual recognition through the app menus, the electronic box of the machine to be used with said app.

- At the start of treatment, capturing information by the sensors in the machine and sending data to the user's mobile device through the electronic box.

- Optionally, sending the data collected by the mobile device app to an external processor, preferably on a remote server in the cloud, which incorporates software with algorithms that are specifically programmed to calculate the requirements of each situation and/or treatment, and which can also receive information inputs from other devices on the land to be treated, for example, via IoT and satellite.

- In any case, execution of an algorithm, programmed in the app and/or in the external processor software, based on the information received and according to the programmed parameters.

- And sending, from the processor to the user's mobile device or directly from the mobile device, a signal with the data calculated by the algorithm and, from the same, to the electronic box installed in the machine which, in turn, translates and transforms the same into activation/deactivation commands of one or another of the machine's actuators to which it is connected to operate based on the sensor readings.

Preferably, in an embodiment of the method specifically applicable to treatments with product dosing machinery, such as phytosanitary sprayers, the step of installing sensors in the machine comprises the installation of speed, pressure, and flow meter sensors.

Optionally, it may also comprise the installation of product tank level sensors, a cardan revolution sensor and, in a preferred embodiment, the installation of ultrasound sensors to detect the presence of vegetation and open and close sectors of the sprayer only when they detect the presence of vegetation or a certain height or volume of vegetation.

Preferably, said ultrasonic sensors are installed on the machine and/or on the tractor, for example on both sides of the front portion and/or distributed at intervals on a vertical support on the front of the tractor to measure the distance to the vegetation and its height, and thus be able to detect the presence and/or type of vegetation and, through a processor algorithm, estimate the volume of vegetation to be treated.

For its part, in said embodiment, the installation of actuators in the machine comprises the installation of nozzles, ejectors, atomisers arranged in different independent sectors, for example 2 or 4 on each side of the machine, as well as electronic ejection regulation valves.

In any case, in the variant embodiment that is applicable to treatments with product dosing machinery, the intelligent automation method for agricultural treatments may comprise, in addition to those already described, additional steps of:

- Sending to the processor or mobile device, in parallel with the sending of information from the sensors, information on a "product dosage map of requirements" either previously or when the user starts the treatment through the app on the mobile device, with which the algorithm calculates the product dose required at any time and in each location according to the map of requirements.

- Sending from the processor or from the mobile device the signal which, in turn, incorporates the data calculated on the product flow rate, and from the mobile device, in turn, sending the information to the electronic box to act on the pressure valve and the ejectors.

Additionally, the method contemplates, as one of the final steps thereof, storing in real time, in the memory of the mobile device or the remote processor, an "intensity map", obtained from the data collected, the calculations carried out and the activation commands sent by the electronic box to the actuators, which allows distinguishing where more or less product has been dosed and, optionally, to be able to modify the algorithm calculations in successive sessions to adapt the activation commands of the actuators to a possible adjustment of product application and/or forward speed.

Additionally, the method comprises the possibility of sending and storing on the mobile device or in the remote processor "maps" of captured images from drones or satellites, in GeoJSON format, with information on the vegetative vigour of the crop in certain areas to be treated and including said information as an addition to that obtained by the sensors in the calculation of the algorithm and automatically applying a variable dosage. Moreover, in a variant embodiment that is applicable to treatments with subsoiler machinery (for ploughing the land), the step of installing sensors and actuators in the machinery comprises the installation of speed sensors and/or cardan revolution sensors and/or ultrasound sensors, in this case to detect uneven ground or the presence of rocks, stones or softer or harder areas, and the installation of hydraulic or pneumatic actuators that regulate the position of the subsoiler based on the depth required.

Furthermore, preferably, the method also comprises additional steps of geolocation of the tractor, which can be carried out with a GPS provided in the mobile device or with an external GPS, to incorporate the same into the algorithm calculations and adapt the speed of movement of the tractor to the machine through the GPS data or the wheel speed sensors.

Furthermore, preferably, the method also comprises additional prior steps of carrying out "variable maps" on images of the land on the screen of the user's mobile device, which define plots, fields or farms to apply specific or different treatments to each of them, for example because of their belonging to different owners and/or crops and different treatments are applied. The definition of said plots is carried out by drawing polygons or closed fences by moving the mouse/cursor of the mobile device over the image of the land shown on the screen thereof.

In turn, the method comprises steps of storing said variable maps, as well as the treatment demand data and other particularities of each map, in the mobile device or in the remote processor, so that the information of each one can be consulted through the application, simply by passing the cursor over the map on the screen of the electronic device, and knowing the real application, i.e., the trajectory made by the tractor and the exact application of treatment at each point.

With all this, and as has been pointed out in previous sections, one of the essential objectives of the method of the invention, particularly in the variant embodiment that is applicable to agricultural treatments with phytosanitary products, is to create a system for measuring the volume of vegetation, prescription in real time based on this detection and simultaneous application for vertical crops. The volume of leaf mass varies in each vertical segment of the crop. In other words, for example, a fruit tree does not have the same volume of leaf mass at all points. Furthermore, leaf mass distribution does not have to be uniform.

The elements comprised by the equipment for carrying out the described method, i.e., the intelligent automation equipment for agricultural treatments and which constitutes a second aspect of the invention, are described in detail in the section on the preferred embodiment of the invention.

## DESCRIPTION OF THE DRAWINGS

To complement the description being made and in order to assist in a better understanding of the features of the invention, a drawing is attached to this descriptive report, as an integral part thereof, in which the following has been represented for illustrative and non-limiting purposes:

figure number 1 shows a schematic representation of the main elements comprised by the intelligent automation equipment for agricultural treatments object of the invention;

figures 2 and 3 show respective schematic representations of an exemplary embodiment of a tractor with a digitalised machine with a sprayer for a phytosanitary product treatment and an exemplary embodiment of a tractor with a machine with a subsoiler;

figure 4 shows a schematic representation of the screen displayed by the app to show in 3D the vegetation measurement map with ultrasound sensors; and

figure 5 shows a diagram of the arrangement of the vertically distributed ultrasonic sensors to measure the vegetation.

## PREFERRED EMBODIMENT OF THE INVENTION

In view of the aforementioned figures, and in accordance with the numbering adopted, one can observe in them a non-limiting example of the implementation of the equipment of the invention, which comprises what is described in detail below.

Thus, as can be seen in said figures, the intelligent automation equipment for agricultural treatments object of the invention, particularly applicable in treatments with phytosanitary products and/or subsoiling by means of machinery (1) incorporated in at least one trailer pulled by a tractor (2), essentially comprises:

- at least one digitalised machine (1) with one or more sensors (3) incorporated in said machine (1) and/or the tractor (2), with one or more actuators (4) installed in the machine (1) to intervene in the operation thereof, and with an electronic box (5) physically connected by wiring with the actuators (4) and connected by wiring or wirelessly with the sensors (3), and equipped with a first Bluetooth communication port;

- a mobile device (6) with a touch screen, tablet, smartphone or similar type, provided with a second Bluetooth communication port to connect wirelessly with the electronic box (5) of the machine (1), equipped with a specific app to recognise and be able to be executed with any digitalised agricultural machine (1) that is going to be used, being able to be suitable for all types of machines, both new and existing, and preferably equipped with GPS or similar and communication with the cloud (I); and

- software with specific algorithms which, based on the data received from the sensors (3) of the machine (1) through the mobile device (6) and, optionally, also from information inputs from other devices on the land to be treated, for example, via IoT and satellite, execute the calculations that define the parameters of the actuators (4) of the machine (1) that are activated, in accordance with at least one piece of information entered into the app indicating which machine (1) is being actuated.

In one embodiment, the software with the specific algorithms is the mobile device's (6) own app.

And, in an alternative embodiment, the software with the specific algorithms is incorporated into the app and/or into a remote processor (7) communicated with the mobile device (6), preferably installed on a cloud server (in a WAN (Wide Area Network))

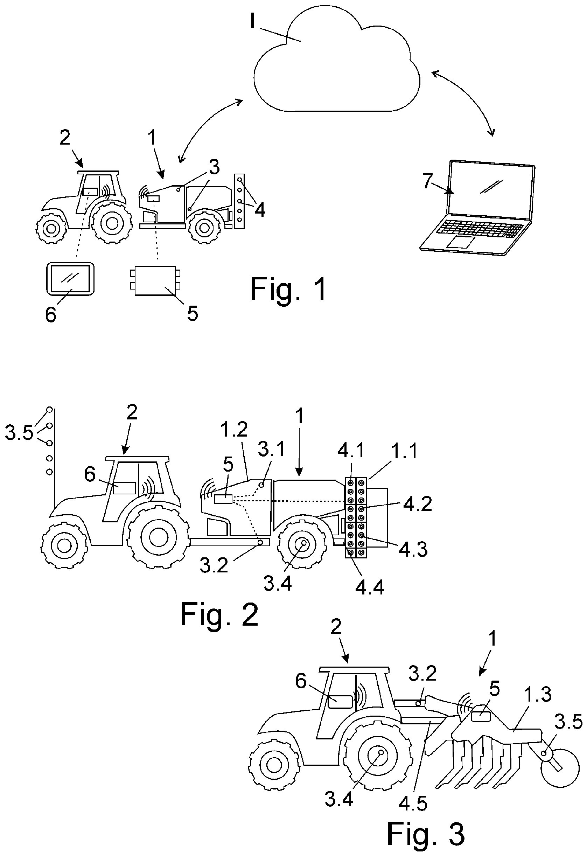

Preferably, in an embodiment of the invention that is applicable to product dosing treatments, wherein the digitalised machine (1) comprises sprayers (1.1) associated with a tank (1.2) of a phytosanitary product, such as that shown in figure 2, the equipment comprises level sensors (3.1) in the product tank (1.2) and/or a cardan revolution sensor (3.2) and/or speed sensors (3.4) and/or ultrasound sensors (3.5) to detect the presence and/or volume of vegetation.

Preferably, the equipment comprises a plurality of ultrasonic sensors (3.5) installed in the machine (1) and/or in the tractor (2), preferably distributed at separate intervals on one or two vertical supports on the front portion of the tractor, so that they measure the distance to the vegetation (v) and the height thereof as the assembly moves through a row (h) of crops.

In said embodiment, applicable for product dosing treatments, wherein the digitalised machine (1)comprises sprayers (1.1) associated with a tank (1.2) of phytosanitary product, the actuators (4) comprise nozzles (4.1) and/or ejectors (4.2) and/or atomisers (4.3) arranged in different independent sectors, for example 2 or 4 on each side of the sprayer (1.1) of the machine, as well as electronic ejection regulation valves (4.4), connected to said nozzles (4.1) and/or ejectors (4.2) and/or atomisers (4.3).

And, in a variant embodiment that is applicable for treatments with subsoiler machinery, wherein the machine (1) comprises, for example, a subsoiler (1.3), the equipment comprises, installed in the machine (1), speed sensors (3.4) and/or a cardan revolution sensor (3.2) and hydraulic or pneumatic actuators (4,5) associated with said subsoiler (1.3). An example of said machine is schematically represented in figure 3.

Below is an exemplary embodiment of the invention for detecting the volume of vegetation in a crop by means of the ultrasonic sensors (3.5) reading, in which the reading of different sensors (3.5) has been unified to obtain the total volume of each side of the sprayer (1.1). With said reading, using the options of the app installed on the electronic device (6), a screen will be created with a real-time map of the vegetation volume data. The data for the formula that will be applied to the detected volume will be entered on said screen, allowing technicians to adjust the same to the crop, treatment or corresponding geographic area. Screens will also be created to enter sensor configuration data.

Thus, and more specifically, said implementation comprises:

- Configuration of data in the app for the application of phytosanitary products on the crop to be treated.

The system has been designed to be universally installed on any agricultural machine (1). The installation parameters will therefore have to be indicated, i.e., the app will have to indicate how many vegetation reading sensors (3.5) have been installed and the separation between the sensors (3.5) which, preferably, are vertically installed on a support provided for this purpose with a certain separation between the same to measure the existence and/or volume of vegetation from the ground to a certain height that the plants of the crop in question may reach. The separation between sensors (3.5) does not have to be the same for all of them. In other words, they can be placed further apart from each other depending on the characteristics of the crop. It is also possible to indicate whether there is any distance parameter between sensors with respect to the longitudinal axis of the machine (1). Similarly, the app has been prepared to indicate the distance between the position of the sensors (3.5) and the position of the sprayer (1.1), so that the system can apply a delay in the application, in this way the application can be matched to the reading point.

The data of this configuration is saved in the memory of the electronic box (5) built into the machine (1). This ensures that any mobile device (6) can be used with any electronic box (5). When pairing the mobile device (6) with the electronic box (5), the latter sends the data stored in its memory to the mobile device (6) so that the app can use these parameters in the volume calculation algorithm, an algorithm which is preferably installed in the app itself.

- The dynamic determination of vegetation volume.

A selector is provided in the configuration menu of the app that allows the option to enable or disable the use of variable dosing based on dynamic volume detection. In this way, a user can perform volume-based or fixed-rate applications by using said selector regardless of whether or not the detected volumes are recorded.

In the preferred example, the system receives, with a delay of between 0.1 and 1 second (1Hz), the measurements obtained by each sensor (3.5). These measurements will correspond to the distance read by the sensor between the sensor itself and the nearest point on the tree or plant. However, the system must use the inverse measure to calculate the plant size. In other words, a small distance will indicate that the plant is very close to the sensor and therefore that at that point the tree or plant is large. On the contrary, a high value for the distance reading will indicate that the plant is small at that point. Therefore, the system has to use the inverse value of that reading to determine the measurement of the plant at that point.

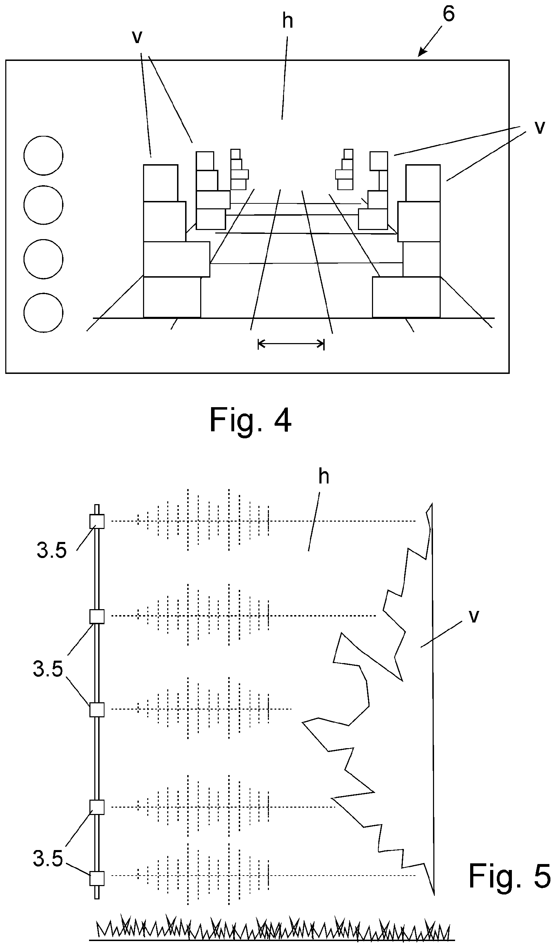

When the use of dynamic vegetation volume detection is enabled, the app allows changing the display of the work screen to a schematic 3D representation of the land, with several information foci, which is schematically shown in figure 4, preferably at least the width of the row (h) through which the tractor passes with the machine (1), which is an extremely important piece of data for calculating the volume of vegetation of the plant, and the values calculated for each vertical segment of vegetation (v), represented as boxes on both sides of the row (h).

The volume of plant vegetation at a point will be calculated based on the following formula:

$$A_n = \frac{RowWidth}{2} - OffsetX - DistanceReadingSensor_n$$

Wherein A is the amplitude of the crop vegetation at the reading point and for the vertical section n.

This formula gives the crop width for each point, but Volume is required.

To do this, the TRV concept (*Tree Row Volume*) is used, which corresponds to the m³ of vegetation per hectare.

$$TRV(m^3/Ha) = \frac{Height(m) \cdot Amplitude(m) \cdot 10000}{RowWidth(m)}$$

Preferably, the amplitude has been calculated in a segmented manner (which provides greater precision), so the sum of these distances calculated separately should be applied. Each Amplitude is multiplied by the Height (separation between sensors).

$$TRV(m^3/Ha) = \frac{\sum(SeparationSensor_n \cdot Amplitude_n) \cdot 10000}{RowWidth(m)}$$

Two indicators "N/s" and "TRV" will be displayed on the screen.

"TRV" indicates the equivalent Vegetation Volume in m³/Ha calculated at that point. This value is continuously calculated.

"N/s" indicates the number of samples that are obtained per second. There is no upper limit set for sampling, so the system will take as many samples as the hardware allows. The sample rate obtained in the example is 455 samples per second.

As stated, the value of the vegetation volume is used based on the distance measured by the sensors (3.5) at different points. However, the effect of vegetation density must also be taken into account.

It would not be efficient for the system to modify the volume to be applied each time it receives a sample. Therefore, preferably, the unit of 1 second has been set as a time window to average all measurements carried out in that period. In this way, the average amplitude value carried out with 450 measurements is obtained every second. This is done for each vertical segment. In other words, we will have 450 measurements per second and for each of the sensors (3.5) that segment the height of the crop.

Moreover, the recommended forward speed for the target crops (vines, fruit trees, citrus) ranges from 1 km/h for citrus trees, up to 8-9 km/h that can be applied to certain fruit trees. This gives a range for the forward speed between 0.27 m/s and 2.5 m/s.

With 450 samples per second, this entails obtaining samples between 0.0006m and 0.005m according to the forward speed. By taking the average over a significant number of measurements, the system makes it possible to contemplate and measure differences in crop density.

- Calculating the volume of product to be applied.

So far the volume measurement system has been described. The system for determining the amount of product to be applied dynamically based on measurements carried out in real time is set out below.

On the one hand, there is the TRV expressed in m³/Ha. Technicians are now required to prescribe a product volume per m³ of crop.

The following formula is used for this:

$$LiquidVolume = K(l/Ha) + n(l/m^3) \cdot TRV$$

The value of K and n must be determined by the agricultural technician depending on the crop, the treatment of the geographical area, etc.

The system must provide the technician with the tool to be able to change the parameters of the K and the n.

The app has a menu screen through which the technician can manage these values.

The application of these parameters on the TRV that is read and updated second by second, will return the quantity of product to be applied expressed in litres per Hectare. The equipment, through the electronic box (5) incorporated in the machine (1) and connected to the actuators (4) of the same, will make the changes in the flow rate (and pressure) based on the forward speed to set the dosage in accordance with this value. This will be done as frequently as the readings are updated, every second in the example described.

The system has been tested by applying the same continuously on two adjacent plots. One plot had a mature crop, while the other had much less developed young specimens. The system was able to automatically identify the differences in vigour and apply the appropriate volume to each vigour.

Having sufficiently described the nature of the present invention, as well as the manner of carrying it out, it is not considered necessary to further extend its explanation for the person skilled in the art to understand its scope and the advantages derived therefrom.

In this respect, variations with respect to the described embodiments are possible. For example, it is possible to replace a Bluetooth network with other wireless personal area networks (WPAN), that are analogous or technically equivalent, which enable the transmission of data without requiring a connection to a WAN to transmit data from the electronic box (5) and the user's mobile device (6). An example of these WPAN networks is the ZigBee system. These alternative WPAN networks fall within the scope of protection of the present invention.

**Claims**

1. An intelligent automation method for agricultural treatments which, particularly applicable in treatments that contemplate the use of dosing machinery for phytosanitary products and/or subsoiler machinery (1) incorporated in one or more trailers towed by a tractor vehicle (2), is **characterised in that** it comprises the steps of:

   - digitalisation of the machinery to be used, consisting of incorporating in at least one machine (1), one or more sensors (3), one or more actuators (4) and an electronic box (5) physically connected to said actuators (4) and physically or wirelessly to the sensors (3), and connected, via a Bluetooth connection, to a user's mobile device (6);
   - programming a specific app to recognise and be able to be executed with any digitalised agricultural machine (1), both new and existing;
   - implementation of the app on a mobile device (6) such as a tablet, smartphone or the like, which is connected, via a Bluetooth connection, to the electronic box (5) of the machine (1));
   - linking, by automatic or manual recognition, the electronic box (5) of the machine (1) with said app;
   - capturing information data by means of the sensors (3) of the machine (1) and sending the data to the user's mobile device (6) through the electronic box (5);
   - sending the data collected by the app to a software with algorithms that are specifically programmed to calculate the requirements of each situation and/or treatment, and which can also receive information inputs from other devices on the land to be treated, for example, via IoT and satellite;
   - executing the algorithm, based on the information received and according to the programmed parameters; and
   - sending, from the mobile device (6), a signal with the data calculated by the algorithm to the electronic box (5) which, in turn, translates and transforms the same into activation/deactivation commands of one or other of the actuators (4) of the machine (1).

2. The intelligent automation method for agricultural treatments, according to claim 1, **characterised in that** the algorithms to calculate the requirements of each situation and/or treatment are programmed in the software of the mobile device app (6).

3. The intelligent automation method for agricultural treatments, according to claim 1 or 2, **characterised in that** the algorithms are programmed in a piece of software on an external processor (7), on a remote server in the cloud (I), with which the mobile device (6) is connected.

4. The intelligent automation method for agricultural treatments, according to any of the preceding claims, **characterised in that**, in treatments with product dosing machinery with phytosanitary sprayers (1.1), the installation of sensors (3) comprises speed, pressure and flow meter sensors, product tank level sensors, cardan revolution sensor and ultrasound sensors (3,5) that measure the distance to the vegetation and its height and detect the presence of vegetation and/or type of vegetation and, through the algorithm, estimate the volume of vegetation.

5. The intelligent automation method for agricultural treatments, according to claim 4, **characterised in that** the installation of actuators (4) includes nozzles, ejectors, atomisers arranged in different independent sectors, on each side of the machine (1), as well as electronic ejection regulation valves.

6. The intelligent automation method for agricultural treatments, according to claim 5, **characterised in that** it comprises additional steps of:

   - sending to the processor (7) or mobile device (6) information on a "product dosage map of requirements" with which the algorithm calculates the product dose required at any time and in each location according to said map of requirements; and
   - sending from the processor (7) or from the mobile device (6) the signal which, in turn, incorporates the data calculated on the product flow rate, and from the mobile device, in turn, sending the information to the electronic box (5) to act on the pressure valve and the ejectors.

7. The intelligent automation method for agricultural treatments, according to claim 5 or 6, **characterised in that** it comprises storing in real time, in the memory of the mobile device (6) or of the remote processor (7) an "intensity map", obtained from the data collected, the calculations carried out and the activation commands sent by the electronic box (5) to the actuators (4), which allows distinguishing where more or less product has been dosed and, where appropriate, to be able to modify the algorithm calculations to adapt the activation commands of the actuators (4).

8. The intelligent automation method for agricultural treatments, according to claim 7, **characterised in that** it comprises sending and storing "maps" in the mobile device (6) or in the remote processor (7) with information on the vegetative vigour in certain areas to be treated and including said information as an addition to that obtained by the sensors (3) in the calculation of the algorithm and automatically applying a variable dosage.

9. The intelligent automation method for agricultural treatments, according to any of claims 1 to 3, **characterised in that**, in treatments with subsoiler machinery, the installation of sensors (3) and actuators (4) in the machinery includes speed sensors and/or cardan revolution sensors and/or ultrasonic sensors, and hydraulic or pneumatic actuators.

10. The intelligent automation method for agricultural treatments, according to any of the preceding claims, **characterised in that** it comprises additional steps of geolocation of the tractor, with a GPS provided in the mobile device (6) or with an external GPS, to incorporate the same into the algorithm calculations and adapt the speed of movement of the tractor (2) with the machine (1) through data from the GPS or from wheel speed sensors.

11. The intelligent automation method for agricultural treatments, according to any of the preceding claims, **characterised in that** it comprises additional prior steps of carrying out "variable maps" on images of the land on the screen of the user's mobile device, which define plots, fields or farms to apply specific or different treatments to each of them, carried out by drawing polygons or closed fences by moving the mouse/cursor of the mobile device (6) over the image of the land shown on the screen thereof.

12. The intelligent automation method for agricultural treatments, according to claim 11, **characterised in that** it comprises storing said variable maps in the mobile device (6) or in the remote processor (7), as well as the treatment demand data and other particularities of each map, to consult the information of each one through the application and to know the actual application, i.e., the trajectory made by the tractor and the exact application of treatment at each point.

13. An intelligent automation equipment for agricultural treatments which, particularly applicable in treatments with phytosanitary products and/or subsoiling by means of machinery (1) incorporated in at least one trailer pulled by a tractor (2), is **characterised in that** it comprises:

    - at least one machine (1) provided with one or more sensors (3) incorporated in said machine (1) and/or the tractor (2), with one or more actuators (4) installed in the machine (2) to intervene in the operation thereof, and with an electronic box (5) physically connected by wiring with the actuators (4) and connected by wiring or wirelessly with the sensors (3), and equipped with a first Bluetooth communication port;
    - a mobile device (6), such as a tablet, smartphone or similar type, provided with a second Bluetooth communication port to connect wirelessly with the electronic box (5) of the machine (1), equipped with a specific app to recognise and be able to be executed with any agricultural machine (1) that is going to be used, being able to be suitable for all types of machines, both new and existing; and
    - software with specific algorithms which, based on the data received from the sensors (3) of the machine (1) through the mobile device (6) and, optionally, also from information inputs from other devices on the land to be treated, for example, via IoT and satellite, execute the calculations that define the parameters of the actuators (4) of the machine (1) that are activated, in accordance with at least one piece of information entered into the app indicating which machine (1) is being actuated.

14. The intelligent automation equipment for agricultural treatments, according to claim 13, **characterised in that** the software with the specific algorithms is the mobile device's own app (6).

15. The intelligent automation equipment for agricultural treatments, according to claim 13 or 14, **characterised in that** the software with the specific algorithms is incorporated into a remote processor (7) communicated with the mobile device (6).

16. The intelligent automation equipment for agricultural treatments, according to any of claims 13 to 15, **characterised in that**, for product dosing treatments, the digitalised machine (1) comprises sprayers (1.1) associated with a phytosanitary product tank (1.2), and comprises level sensors (3.1) in the product tank (1.2) and/or a cardan revolution sensor (3.2) and/or speed sensors (3.4) and/or ultrasound sensors (3.5) to detect the presence and/or volume of vegetation.

17. The intelligent automation equipment for agricultural treatments, according to claim 16, **characterised in that** it comprises a plurality of ultrasonic sensors (3.5) installed, distributed at separate intervals, on vertical supports on the front portion of the tractor, so that they measure the distance to the vegetation (v) and its height as the assembly moves through a row (h) of crops.

18. The intelligent automation equipment for agricultural treatments, according to claim 17, **characterised in that** the digitalised machine (1) comprises, as actuators (4), nozzles (4.1) and/or ejectors (4.2) and/or atomisers (4.3) arranged in different independent sectors, on each side of the sprayer (1.1), and valves (4.4) for electronic ejection regulation, connected to said nozzles (4.1) and/or ejectors (4.2) and/or atomisers (4.3).

19. The intelligent automation equipment for agricultural treatments, according to any of claims 13 to 15, **characterised in that** for treatments with subsoiler machinery, the machine (1) comprises a subsoiler (1.3) and speed sensors (3.4) and/or a cardan revolution sensor (3.2) and hydraulic or pneumatic actuators (4,5) associated with said subsoiler (1.3).

20. The intelligent automation equipment for agricultural treatments, according to claim 13, **characterised in that** said mobile device (6) is provided with a GPS or similar type geolocation device and communication with the cloud.

Fig. 1

Fig. 2

Fig. 3

Fig. 4

Fig. 5

Europäisches
Patentamt
European
Patent Office
Office européen
des brevets

# EUROPEAN SEARCH REPORT

Application Number

EP 24 38 2840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/281110 A1 (MCNICHOLS JOHN [US] ET AL) 10 September 2020 (2020-09-10) <br> * abstract * <br> * paragraph [0046] - paragraph [0056] * <br> * paragraph [0066] - paragraph [0068] * <br> * paragraph [0081] - paragraph [0090] * <br> * paragraph [0152] - paragraph [0156] * <br> * figures 1, 11, 12 * | 1-15 | INV. <br> A01B79/00 <br> A01M7/00 <br> A01M21/04 <br> G06F16/29 <br> G06Q50/02 |
| A | WO 2023/244201 A1 (FARMLABS TARIM TEKNOLOJILERI VE ARGE ANONIM SIRKETI [TR]) 21 December 2023 (2023-12-21) <br> * abstract * <br> * page 12, line 10 - page 17, line 11 * <br> * figure 1 * | 1-15 | |
| A | CN 109 919 341 A (GUIZHOU DARUNTIAN AGRICULTURE CO LTD) 21 June 2019 (2019-06-21) <br> * abstract * <br> * paragraph [0004] - paragraph [0037] * | 1-15 | |
| | | | TECHNICAL FIELDS SEARCHED (IPC) |
| A | EMMI LUIS ET AL: "Integrating Sensory/Actuation Systems in Agricultural Vehicles", SENSORS, vol. 14, no. 3, 26 February 2014 (2014-02-26), pages 4014-4049, XP093261241, CH ISSN: 1424-8220, DOI: 10.3390/s140304014 * abstract * | 1-15 | A01B <br> A01M <br> G06Q <br> G06F |

The present search report has been drawn up for all claims

| Place of search | Date of completion of the search | Examiner |
|---|---|---|
| Munich | 20 March 2025 | Bertolissi, Edy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 686 385 A1**

## ANNEX TO THE EUROPEAN SEARCH REPORT
## ON EUROPEAN PATENT APPLICATION NO.

EP 24 38 2840

20-03-2025

| Patent document cited in search report | Publication date | Patent family member(s) | Publication date |
|---|---|---|---|
| US 2020281110 A1 | 10-09-2020 | AR 118289 A1 | 22-09-2021 |
| | | BR 112021016048 A2 | 05-10-2021 |
| | | CA 3132803 A1 | 17-09-2020 |
| | | CN 113614769 A | 05-11-2021 |
| | | EP 3935599 A1 | 12-01-2022 |
| | | US 2020281110 A1 | 10-09-2020 |
| | | WO 2020185647 A1 | 17-09-2020 |
| WO 2023244201 A1 | 21-12-2023 | NONE | |
| CN 109919341 A | 21-06-2019 | NONE | |

EPO FORM P0459